# EUROPÄISCHE PATENTSCHRIFT

(11) **EP 1 851 514 B1**
(45) Veröffentlichungstag und Bekanntmachung des Hinweises auf die Patenterteilung: **13.10.2010**
(21) Anmeldenummer: 06723120.9
(22) Anmeldetag: 27.02.2006
(51) Int. Cl.: G01F 1/28, F16K 11/04, F16K 1/04, F16L 41/16, G01F 15/00

(54) **VENTILEINSATZ FÜR DURCHFLUSSMENGENMESSER**
VALVE INSERT FOR A FLOW METER
GARNITURE DE SOUPAPE POUR DEBITMETRE

(30) Priorität: 26.02.2005 DE 202005003131 U; 16.08.2005 DE 202005013027 U
(43) Veröffentlichungstag der Anmeldung: 07.11.2007
(73) Patentinhaber: GF-Tec GmbH, 64572 Büttelborn (DE)
(72) Erfinder: GRAF, Hubert, 64572 Büttelborn (DE)
(74) Vertreter: Bill, Burkart Hartmut
(86) Internationale Anmeldenummer: PCT/EP2006/001754
(87) Internationale Veröffentlichungsnummer: WO 2006/089783

(56) Entgegenhaltungen:
- CH-A5- 688 834
- DE-A1- 3 509 718
- DE-A1- 19 536 607
- DE-A1- 19 608 780
- DE-A1- 19 734 533
- GB-A- 2 348 268
- US-A- 6 089 264

## Beschreibung

Die Erfindung betrifft im allgemeinen einen Durchflussmengenmesser mit Verschlussmöglichkeit, welcher als Ventileinsatz gestaltet ist. Die Erfindung betrifft im speziellen einen Ventileinsatz, insbesondere für ein Verteilerventil zum Verteilen eines Fluidstroms in Rohrleitungen, zum Beispiel für Warmwasserheizungsanlagen. Die Erfindung betrifft des Weiteren einen Ventilkörper für einen derartigen Ventileinsatz.

Der hydraulische Abgleich von Rohrleitungen in Gebäuden ist eine wesentliche Voraussetzung für einen einwandfreien und wirtschaftlichen Betrieb einer Heizungsanlage. In einer nicht hydraulisch abgeglichenen Anlage kann es zu einer Unter- oder Überversorgung einzelner Heizkörper und Heizungsstränge kommen. Ungleichmäßige Wärmeabgabe von Heizkörpern, Geräuschentwicklung, Einschränkung der Regelfähigkeit und das Nichterreichen notwendiger Temperaturdifferenzen in Heizungsanlagen können die Folgen eines mangelhaften hydraulischen Abgleichs von Pumpwassersystemen zur Wärmeversorgung sein. Der hydraulische Abgleich von Rohrleitungen wird auch in aktuellen DIN-Normen und Verordnungen gefordert.

Durch einen hydraulischen Abgleich wird ein Gleichgewicht von Strömungswiderständen in hydraulischen Netzen erreicht. Die Einstellung des Gleichgewichts wird dadurch erzielt, dass die einzelnen Kreise und Netzteile derart hinsichtlich ihres jeweiligen Strömungswiderstands miteinander abgeglichen werden, dass sie alle mit ihrem Nennvolumen durchströmt werden. Durch einen hydraulischen Abgleich wird damit die korrekte Verteilung der zu den verschiedenen Komponenten des hydraulischen Netzes passenden Durchflussmengen erreicht. Der hydraulische Abgleich gewährleistet, dass die durch den Planer des hydraulischen Netzes vorgegebenen Werte für die Durchflussmengen auch eingehalten werden.

Zum Durchführen des hydraulischen Abgleichs müssen hydraulische Regler in den Strängen und Einregulierungsventilen an den Verbrauchern eingebaut sein. Nach der Einregulierung sollten die eingestellten Werte unverlierbar an den Ventilen vermerkt werden.

In dem Dokument DE 35 09 718 C2 ist ein Verteilerventil mit Durchflussmesser insbesondere für Warmwasser-Heizungsanlagen beschrieben, dessen Gehäuse einen zylindrischen Hauptleitungsabschnitt umschließt. In den Hauptleitungsabschnitt erstreckt sich ein Querrohr, welches mit einem Anschluss für eine Zweigleitung verbunden ist. Das sich im Inneren des Hauptleitungsabschnittes befindliche innere freie Endes des Querrohres ist zu einem Ventilsitz für einen Verschlusskörper ausgebildet, der durch Drehen einer aus dem Hauptleitungsabschnitt vorstehenden Spindel in das Querrohr und aus diesem heraus beweglich ist. Zur Durchflussmessung ist im Querrohr ein Anströmglied über eine Feder am Verschlusskörper aufgehängt. Eine mit dem Anströmglied verbundene Stellungsanzeigestange ist in eine Sackbohrung der aus durchsichtigem Werkstoff hergestellten Spindel aus dem Verteilergehäuse herausgeführt. Der jeweilige Strömungsdurchsatz ist mittels einer Stellungsmarkierung an einer Spindelskala ablesbar.

Nachteilig ist, dass der Strömungsquerschnitt für das Wasser aus dem Hauptleitungsabschnitt in das Querrohr von der Stellung des konischen Verschlusskörpers abhängt. Ferner beeinflusst die die Stellungsanzeigestange im Querrohr umgebende Feder die Strömungsverhältnisse im Querrohr.

In dem Dokument DE 196 08 780 A1 sowie in DE 296 23 644 U1 wird ein Verteilerventil mit Durchflussmesser, insbesondere für Warmwasserheizungsanlagen beschrieben. Es umfasst einen Hauptleitungsabschnitt in einem Gehäuse, ein Abzweigrohr und eine Spindel zum Verschließen und Einstellen sowie zum Anzeigen der Durchflussmenge. Das Abzweigrohr erstreckt sich nahezu über die gesamte Höhe beziehungsweise den gesamten Durchmesser des Hauptleitungsabschnitts, so dass das einen Ventilsitz bildende innere Ende des Abzweigrohrs in geringem Abstand von der Innenmantelfläche des Hauptleitungsabschnittes angeordnet ist.

Ein Führungs- und Verschlussteil des Ventils weist am unteren Ende einen Verschlusskörper auf, welcher bei Verdrehung und Bewegung der Spindel nach unten in das obere Ende des Abzweigrohres eintaucht, so dass der Durchtrittsquerschnitt zwischen dem Verschlusskörper und der Innenwandung des Abzweigrohrs beziehungsweise dem Ventilsitz variiert beziehungsweise eingestellt werden kann. Das Führungs- und Verschlussteil ist gemäß DE 196 08 780 A1 unten in der Spindel montiert und in das untere Ende eines Dichtungsringfixierteils mittels Haltehilfsmitteln eingesteckt und in diesen befestigt. Das Führungs- und Verschlussteil weist eine Ringnut zur Aufnahme eines O-Rings auf, welcher die Abdichtung zum Ventilsitz des Abzweigrohres ermöglicht. Der Dichtungsringfixierteil bildet den unteren Bereich der Spindel, welche außerdem einen nach oben aufragenden Griff und Anzeigeteil sowie einen Gewindeteil umfasst.

Zur Durchflussmessung ist im Querrohr ein Anströmglied über eine Stellungsanzeigestange und eine Feder in einer Sackbohrung der aus durchsichtigem Werkstoff hergestellten Spindel aus dem Führungs- und Verschlussteil heraus geführt. Der jeweilige Strömungsdurchsatz ist mittels einer Markierung an der Spindelskala ablesbar.

Nachteilig ist, dass die äußere Gestaltung des Führungs- und Verschlussteils eine aufwendige Gestaltung des Hauptleitungsabschnittes des Querrohrs und einer oberen Gehäuseöffnung erfordert, wobei das Abzweigrohr und die obere Gehäuseöffnung das Führungs- und Verschlussteil den Stellungsanzeigestift und den Anströmkörper umgeben. Für das Verteilerventil gemäß dem Dokument DE 196 08 780 A1 ist für eine zuverlässige Mess- beziehungsweise Regelfunktion daher die Verwendung von aufeinander abgestimmten inneren Strukturen von Hauptleitungsabschnitt, Abzweigrohr und oberer Gehäuseöffnung auf der einen, sowie Spindel mit Führungs- und Verschlussteil, Stellungsanzeigestift und Anströmglied auf der anderen Seite erforderlich. Die exakte Anpassung zahlreicher einzelner Komponenten bringt zudem eine komplizierte und daher teure und fehleranfällige Fertigung mit sich.

Dadurch, dass die Feder oberhalb der Stellungsanzeigestange in der Sackbohrung der Spindel eingefangen ist, wird zudem das parallaxefreie Ablesen des Durchflusses durch das Querrohr an der Spindel erschwert; bei flüchtiger Betrachtung kann nur schwer zwischen den einzelnen Windungen der Feder und dem oberen Ende der Stellungsanzeigestange unterschieden werden.

Der Erfindung liegt daher die Aufgabe zugrunde, einen verbesserten Ventileinsatz für ein aus einem Haupt- in ein Querrohr oder umgekehrt strömenden Medium, vornehmlich Wasser, zu schaffen, welcher universell einsetzbar ist. Insbesondere soll ein Ventileinsatz geschaffen werden, mit dem auf einfache Weise eine Anpassung an unterschiedliche Einsatzmöglichkeiten erzielt werden kann.

Eine weitere Aufgabe der Erfindung liegt darin, einen Ventileinsatz mit einem möglichst einfachen Aufbau bereit zu stellen.

Außerdem ist es eine Aufgabe der Erfindung, einen Ventileinsatz zu schaffen, welcher mit einem Hauptleitungsabschnitt eines Rohres verbunden werden und dabei Fertigungstoleranzen derart kompensieren kann, dass er mit unterschiedlichen Ventilsitzen auch ohne die Verwendung von Adaptern, die die Position des Ventileinsatzes und des Ventilsitzes aufeinander abstimmen, einsatzfähig ist.

Diese Aufgaben werden mit einem Ventileinsatz und einem Ventilkörper gemäß unabhängigem Anspruch gelöst. Vorteilhafte Weiterbildungen sind Gegenstand der Unteransprüche.

Das in DE 196 08 780 A1 dargestellte Verteilerventil wird gemäß der Erfindung bereits dadurch verbessert, dass ein Ventileinsatz mit einem Einschraubkörper in Form eines Rohrstückes bereitgestellt wird, welcher mit einem Außengewinde versehen ist und ein Innengewinde aufweist und ferner eine hohle, in den Einschraubkörper eingesetzte und am oberen Ende verschlossene Spindel umfasst, die mit einem oberen, durchsichtigen Abschnitt über den Einschraubkörper empor ragt, an einem mittleren Abschnitt ein mit dem Innengewinde kämmendes Gewinde aufweist, unterhalb des Gewindes eine innen an dem Einschraubkörper anliegende Dichtung trägt, und am unteren Ende mit einem unterhalb des Einschraubkörpers befindlichen und axial durchbohrten Ventilkörper verbunden ist, wobei sich ein Messstab durch die Axialbohrung des Ventilkörpers und in die Spindel erstreckt und an seinem aus dem Ventilkörper nach unten vorstehenden Ende ein Anströmglied trägt und wobei in der Spindel eine den Messstab beaufschlagende Feder beherbergt ist, wobei ein unterer Teil des Ventilkörpers zylindrisch und mit einem etwas kleineren Außendurchmesser als das Anströmglied ausgebildet ist und am Übergang zu einer radialen Erweiterung eine Flachdichtung trägt, wobei die Feder den Messstab innerhalb des von dem Einschraubkörper abgedeckten Abschnittes der Spindel umgibt.

Mit dieser Gestaltung kann erreicht werden, dass bei verändertem Querrohr-Querschnitt nur der zylindrische Teil des Ventilkörpers angepasst zu werden braucht. Die Flachdichtung bietet die Möglichkeit, Fertigungstoleranzen zu kompensieren, die daher größer als herkömmlich gewählt werden können. Zudem ermöglicht die Flachdichtung die Verwendung des Ventileinsatzes für Schrägsitzventile.

Die Erfindung bietet mehrere Vorteile: Der Meßstab wurde so gestaltet, dass die gleichen Bauteile des Durchflussmengenmessers für ein Anströmen im Vor- und im Rücklauf von bzw zu der Mediumhauptleitung geeignet sind, ohne dass Hauptverbindungen gelöst und aufwendig gewechselt werden müssen. Im offenen Zustand des Ventils wird die Spindel vor allem bei höheren Mediumtemperaturen vor zu starker Erwärmung geschützt, weil der zweckmäßig aus Messing gefertigte Ventilkörper einen wesentlichen Teil seiner Wärme an den metallischen Einschraubkörper abgeben kann. Bei verändertem Querrohr-Querschnitt braucht nur der zylindrische Teil des Ventilkörpers angepasst zu werden, alle anderen Teile des erfindungsgemäßen Ventileinsatzes können unverändert beibehalten werden. Die erfindungsgemäße Flachdichtung kompensiert Fertigungstoleranzen, die größer als herkömmlich gewählt werden können. Ferner ermöglicht die Flachdichtung die Verwendung des erfindungsgemäßen Ventileinsatzes für Schrägsitzventile. Da schließlich die Feder nicht sichtbar bleibt, ist eine parallaxefreie Ablesung ähnlich wie bei Displays sichergestellt.

In Weiterbildung der Erfindung ist vorgesehen, dass die zweckmäßig als Dichtungsscheibe ausgebildete Flachdichtung an ihrem inneren Rand mit einer konischen Verdickung versehen ist. Weiter ist vorteilhaft, wenn der Ventilkörper einen Sitz für die Feder aufweist, welche sich an ihrem dem Sitz gegenüberliegenden Ende an einer radialen, sichtgeschützten Schulter des Meßstabes abstützt. Zur Verwendung des Ventileinsatzes im Rücklauf empfiehlt es sich, dass die als Druckfeder ausgebildete Feder im Zwischenraum oberhalb des Meßstabes und unterhalb der Schauglasoberkante ist. Einer Verwendung des erfindungsgemäßen Ventileinsatzes im Vorlauf ist dienlich, die Feder als Druckfeder auszubilden. Sie kann in wenigstens zwei hintereinandergeschaltete Teilfedern mit unterschiedlichen Federeigenschaften unterteilt sein. Anstelle der Hintereinanderschaltung der beiden Teilfedern kommt natürlich auch eine Parallelschaltung derselben in Betracht. Für die Wärmeableitung ist es günstig, wenn der zweckmäßig metallische Ventilkörper bei offenem Ventil an der Unterkante der Mutter anliegt. Zweckmäßig ist schließlich, wenn der Ventilkörper oberhalb seines unteren Abschnittes eine radiale, eine topfartige Einsenkung umgebende Erweiterung aufweist, in welche das untere Ende der Spindel eingeschraubt ist. Der Boden des Topfes ist dann gleichzeitig der Sitz der Feder.

Während gemäß dem oben beschriebenen Ventileinsatz bereits die Kompensierung von Fertigungstoleranzen am Übergang zwischen Querrohr beziehungsweise Ventilsitz und Ventilkörper sowie in Bezug auf die koaxiale Ausrichtung von Ventilkörper und Querrohr im eingebauten Zustand ermöglicht wird, kann der innere Aufbau des Ventileinsatzes in vorteilhafter Weise, jedoch in Abwandlung zum Schutzgegenstand noch einfacher gestaltet werden.

So kann des Weiteren einen Ventileinsatz, insbesondere für ein Regulierventil und/oder Verteilerventil zum Verteilen eines Fluidstroms in Rohrleitungen, insbesondere für Warmwasserheizungsanlagen, bereit werden, wobei der Ventilkörper selbst ein deformierbares Material umfasst.

Das deformierbare Material des Ventilkörpers bietet dann vorteilhafterweise die Möglichkeit, auf eine zusätzliche Flachdichtung verzichten zu können. Durch das deformierbare Material des Ventilkörpers selbst kann somit die Anzahl der Bauteile des Ventileinsatzes reduziert werden. Indem der Ventilkörper selbst ein deformierbares Material umfasst, können mit dem Ventileinsatz Fertigungstoleranzen kompensiert werden, und zwar zum einen, was die relative Positionierung von Ventilkörper und Ventilsitz betrifft, und zum anderen, was die Positionierung des Messtabes der Spindel und des Anschlusskörpers relativ zum Ventilkörper angeht.

Die Erfindung wird nachfolgend unter Bezugnahme auf die beigefügten Figuren näher erläutert. Dieselben Bauteile werden auf den Figuren mit denselben Bezugszeichen gekennzeichnet.

Es zeigen:
- Figur 1: eine schematische Darstellung eines Hauptrohres mit Querrohr im Schnitt sowie mit Ventileinsatz in Ansicht,
- Figur 2: eine schematische Darstellung eines Axialschnittes durch den Ventileinsatz nach einer ersten Ausführung gemäß Schutzgegenstand der Erfindung,
- Figur 3: eine schematische Darstellung des Ventilkörpers gemäß einer zum Schutzgegenstand abgewandelten zweiten Ausführungsform in Axialschnitt,
- Figur 4: eine schematische Darstellung eines Ventilkörpers mit eingesetzter Spindel gemäß einer zum Schutzgegenstand abgewandelten zweiten Ausführungsform in Axialschnitt,
- Figur 5: eine schematische Darstellung eines Ventileinsatzes gemäß einer zum Schutzgegenstand abgewandelten zweiten Ausführungsform in Axialschnitt,
- Figur 6: eine schematische Darstellung des Ventilkörpers gemäß einer zum Schutzgegenstand abgewandelten dritten Ausführungsform in Axialschnitt,
- Figur 7: eine schematische Darstellung eines Ventilkörpers mit eingesetzter Spindel gemäß einer zum Schutzgegenstand abgewandelten dritten Ausführungsform in Axialschnitt,
- Figur 8: eine schematische Darstellung eines Ventileinsatzes gemäß einer zum Schutzgegenstand abgewandelten dritten Ausführungsform in Axialschnitt,
- Figur 9: eine schematische Darstellung des Ventilkörpers gemäß einer zum Schutzgegenstand abgewandelten dritten Ausführungsform in Axialschnitt,
- Figur 10: eine schematische Darstellung eines Ventilkörpers mit eingesetzter Spindel gemäß einer zum Schutzgegenstand abgewandelten vierten Ausführungsform in Axialschnitt,
- Figur 11: eine schematische Darstellung eines Ventileinsatzes gemäß einer zum Schutzgegenstand abgewandelten vierten Ausführungsform in Axialschnitt, und
- Figur 12: eine schematische Darstellung eines Ausbruchs aus einem, zum Schutzgegenstand abgewandelten Ventileinsatz mit Führungsscheibe im Axialschnitt.

Der im Ganzen mit 1 bezeichnete Ventileinsatz kann für ein Absperrventil für beliebige strömungsfähige Medien auch höherer Temperatur verwendet werden. Als Beispiel wird nachfolgend auf eine Warmwasserversorgung einer Heizungsanlage Bezug genommen.

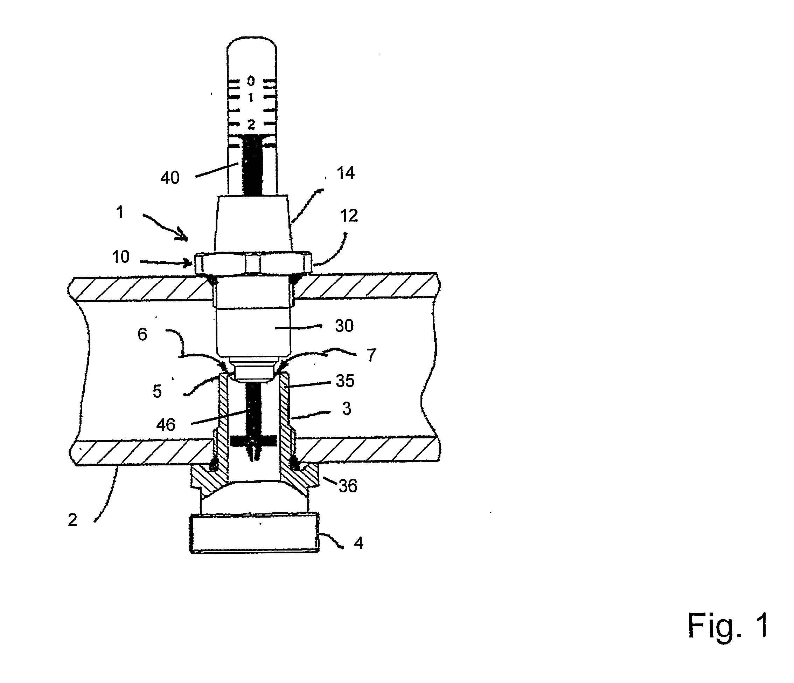

In Figur 1 ist ein Hauptleitungsabschnitt einer Wasserhauptleitung 2 gezeigt. Aus dem Hauptleitungsabschnitt 2 wird Wasser über ein Querrohr 3 abgezweigt, welches in eine Öffnung der Hauptleitung 2 eingeschraubt ist und einen Anschlussstutzen 4 außerhalb der Hauptleitung 2 aufweist und in die Hauptleitung 2 senkrecht zu ihrer Längsachse mündet. Das im Hauptleitungsabschnitt 2 befindliche freie Ende 35 des Querrohrs 3 ist offen. Das andere Ende 36 des Querrohrs 3 ist über den Anschlussstutzen 4 an eine Zweigleitung anschließbar. Das Ende 36 des Querrohrs 3 kann auch verschlossen sein, je nachdem, für welchen Anwendungsfall der Ventileinsatz verwendet wird. Das in den Hauptleitungsabschnitt 2 hinein ragende freie Ende 36 ist als Ventilsitz 5 ausgebildet. Der Ventilsitz 5 kann beispielsweise konisch oder mit einem Halbrundprofil gestaltet sein.

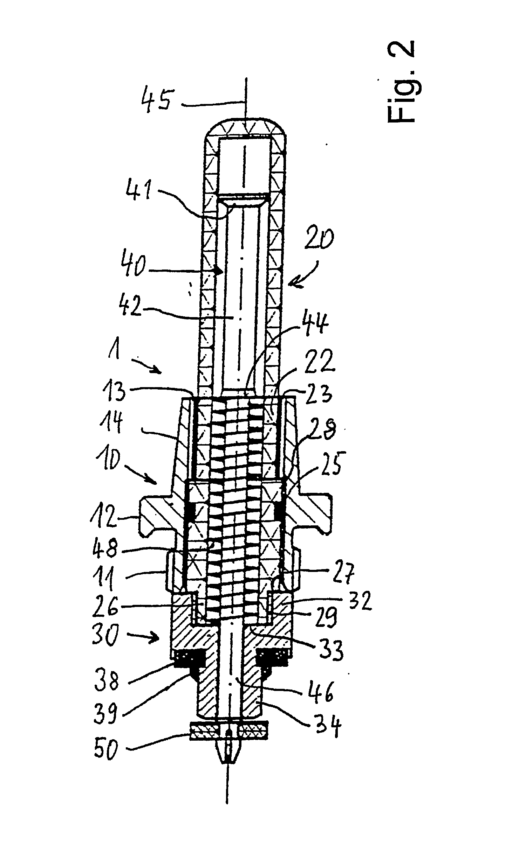

In koaxialer Ausrichtung zur Längsachse des Querrohrs 3 ist in eine weitere Öffnung des Hauptleitungsabschnitts 2 der Ventileinsatz 1 von außen eingeschraubt. Dazu umfasst der Ventileinsatz 1 einen rohrförmigen Einschraubkörper 10, beispielsweise aus Messing, der an seinem unteren Ende ein für das dichte Verschrauben mit dem Hauptleitungsabschnitt 2 geeignetes Außengewinde 11 trägt. Der Einschraubkörper 10 weist oberhalb des Außengewindes 11 einen Außensechskant 12 auf. Oberhalb des Außensechskants 12 besitzt der Einschraubkörper 10 einen rohrförmigen Dom 14, an dessen Innenwand ein Innengewinde 13 ausgebildet ist (siehe Figur 2). Eine aus durchsichtigem Kunststoff bestehende hohle Spindel 20 ist oben verschlossen und ragt mit ihrem ersten Abschnitt 21 über den Dom 14 hinaus. Die Spindel ist mittels eines an einem mittleren Abschnitt 22 der Spindel 20 ausgebildeten Außengewindes 23 in das Innengewinde 13 eingeschraubt. Auf der Spindel 20 befindet sich eine Skala.

Eine Ringdichtung 25 sitzt einerseits in einer unterhalb des Außengewindes 23 im Mantel der Spindel 20 ausgebildeten Ringnut und liegt andererseits an der Innenwand des Einschraubkörpers 10 dichtend an. Der untere Abschnitt 26 der Spindel 20 ist durch eine radial einspringende Schulter 27 verjüngt und mit einem weiteren Außengewinde 29 versehen, welches in ein Gegengewinde eines Ventilkörpers 30 eingreift.

Die Spindel 20 kann daher von unten in den Einschraubkörper 10 eingeführt und durch Eingriff der Gewinde 13 und 23 nach oben gedreht werden, bis eine radial vorstehende Schulter 28 der Spindel einen Vorsprung aus der Innenwand des Einschraubkörpers 10 unterfaßt.

In die Spindel 20 ist von unten ein undurchsichtiger Meßstab 40 eingeführt, dessen spindelseitigen Ende als vom Äußeren der Spindel ablesbare Anzeige für die axiale Position des Meßstabes 40 in der Spindel dient. Dazu besitzt das spindelseitige Ende eine tellerartige Verbreiterung 41 mit dünnem Rand, was die genaue Ablesung an der auf die Spindel aufgebrachten Skala erleichtert (vergleiche Figur 1). Der Meßstab weist einen langen Schaft 42 auf, dessen oberer Abschnitt bei der voll geöffneten Stellung des Ventils bis mindestens zum oberen Rand des Domes 14 reicht und sich über eine radial einspringende Schulter 44 in einen radial verjüngten unteren, aus der Spindel 20 und dem Ventilkörper 30 vorstehenden Abschnitt 46 fortsetzt. Innerhalb der Spindel 20 ist eine Spiralfeder 48 eingefangen, die sich als Druckfeder einenends auf dem Ventilkörper 30 und andernends an der Schulter 44 abstützt. Die Druckfeder 48 drängt daher den Meßstab 40 in der Spindel nach oben.

Bei gemäß Figur 1 voll geöffnetem Ventil kann Wasser entsprechend den Pfeilen 6 und 7 an dem zylindrischen Teil 34 vorbei in das Querrohr 3 einströmen. Entsprechend der Größe des Wasserdurchsatzes durch das Querrohr 3 wird das Anströmglied 50 in das Querrohr hineingezogen mit der Folge, dass sich der Meßstab 40 in der Spindel 20 nach unten bewegt, bis die Anströmkraft auf das Anströmglied 50 mit dem Gegendruck der entsprechend komprimierten Feder 48 sich etwa im Gleichgewicht befindet. An der Skala des Spindel 20 kann der Wasserdurchsatz durch das Querrohr abgelesen werden. Zum Absperren des Ventils wird die Spindel 20 in dem Einschraubkörper 10 nach unten gedreht, bis eine Dichtung 38, hier eine Flachdichtung, auf dem Rand des Querrohres 3 dichtend aufsitzt.

In einer ersten Ausführungsform gemäß Schutzgegenstand der Erfindung besteht der Ventilkörper 30 zwecks Wärmeableitung an den Einschraubkörper 10 aus Metall, zweckmäßig Messing, und ist in Ausrichtung auf die Mittellinie 45 des Meßstabes 40 axial durchbohrt (siehe Figur 2). Der Ventilkörper 30 umfasst einen oberen topfartigen Teil 32, der im Verhältnis zu seinem zylindrischen unteren Teil 34 radial derart erweitert ist, dass die Seitenwand des Teils 32 gegen das untere Ende des Einschraubkörpers 10 anliegen kann. An der Seitenwand ist innen ein Gewinde ausgebildet, in welches die Spindel 20 mit ihrem unteren Gewinde 29 eingeschraubt werden kann. Das Gewinde 29 ist im Verhältnis zum Gewinde 23 derart ausgelegt, dass bei Drehen der Spindel 20 in der einen oder anderen Richtung diese sich aus dem Ventilkörper 30 nicht löst, der Ventilkörper 30 also stets mit der Spindel 20 mitdreht. Damit ist die Verankerung der Spindel 20 im Ventilkörper 30 etwa mittels Klebstoff oder dergleichen Verunreinigungen bedingenden Massen oder Schmiermittel entbehrlich. Der Boden des Teiles 32 bildet einen Sitz 33 für die Feder 48.

Am Übergang vom topfartigen Teil 32 zum zylindrischen Teil 34 ist eine den Teil 34 umgebende Flachdichtung 38 in Form eines Dichtringes angeordnet, welche am Teil 34 eine konisch nach unten zulaufende Verdickung 39 aufweist. Hierdurch werden wesentlich verbesserte Regeleigenschaften erreicht, wenn mittels der Spindel durch Eindrehen der Volumenstrom begrenzt bzw. eingeregelt wird. An das untere Ende des Meßstab-Abschnittes 46 ist ein Anströmglied 50 befestigt, dessen Außendurchmesser etwas größer als der Außendurchmesser des zylindrischen Teiles 46, jedoch kleiner ist als die lichte Weite des Querrohres 3.

Soll der Ventileinsatz 1 für den Rücklauf eines Warmwassersystems verwendet werden, muss lediglich die Feder 48 oberhalb des Meßstabes plaziert werden, welche am Sitz 33 und an der Schulter 44 fest verankert ist und eine solche axiale Länge besitzt, das bei geschlossenem Ventil die Erweiterung 41 sich etwa in Höhe des oberen Randes des Domes 14 befindet. Bei geöffnetem Ventil drückt daher der Wasser-Rückstrom im Querrohr 3 in Gegenrichtung der Pfeile 6 und 7 das Anströmglied 50 nach oben, so dass der Meßstab 40 entsprechend angehoben wird. Die Umstellung des Ventileinsatzes 1 von Vorlauf auf Rücklauf gelingt also mit einfachen Mitteln und wenigen Handgriffen.

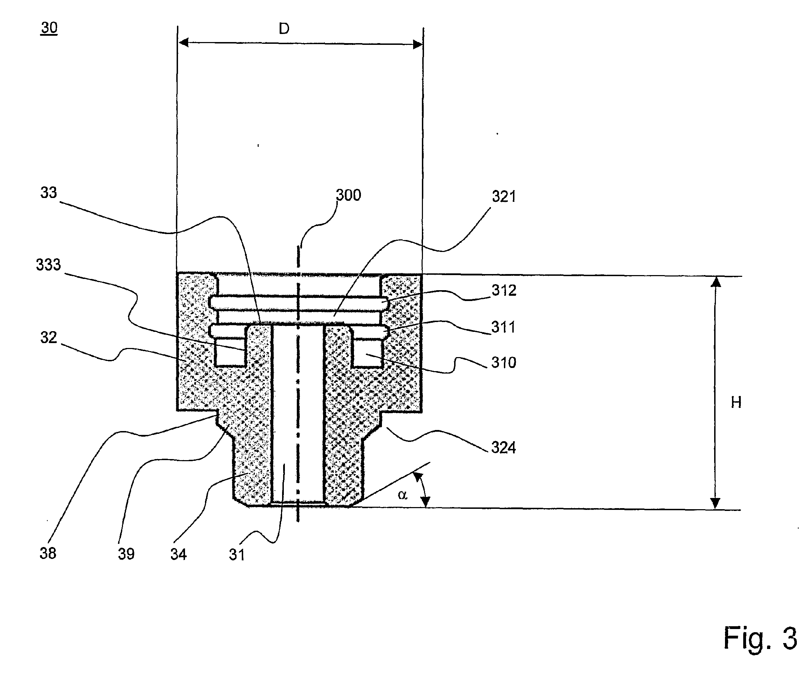

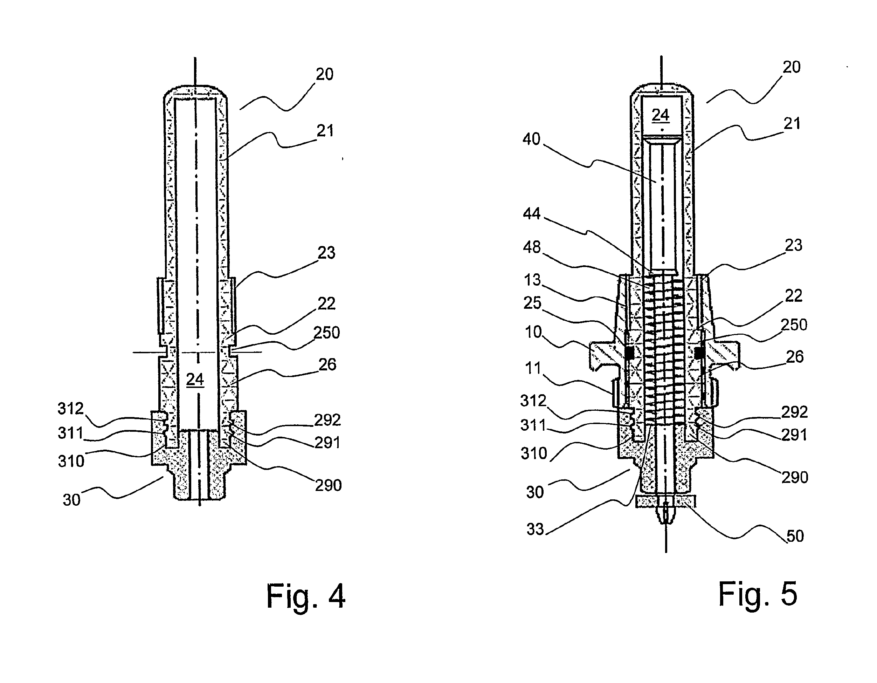

In einer zweiten zum Schutzgegenstand abgewandelten Ausführungsform umfasst der Ventilkörper 30 selbst ein deformierbares Material. Ein derartiger Ventilkörper ist in Figur 3 gezeigt. An seiner im Inneren der Wasserhauptleitung 2 positionierten Seite weist der Ventileinsatz 1 einen Ventilkörper 30 auf, dessen oberer topfartiger Teil 32 sich an den Einschraubkörper 10 anschließt. Der obere topfartige Teil 32 des Ventilkörpers 30 geht über in einen zylindrischen unteren Teil 34 (siehe Figur 3). Im von der Spindel 20 dem Einschraubkörper 10 und dem Ventilkörper 30 umschlossenen Raum ist ein Maßstab 40 angeordnet, dessen unterer Abschnitt 46 in der Darstellung in Figur 1 aus dem zylindrischen unteren Teil 34 (vergleiche Figur 5) des Ventilkörpers 30 heraus ragt. Der untere Abschnitt 46 des Messstabs 40 trägt ein Anströmglied 50.

Bei dem gemäß Figur 1 geöffneten Ventil aus Ventileinsatz 1 und Ventilsitz 5 kann Wasser entsprechend den Pfeilen 6 und 7 an dem zylindrischen Teil 34 vorbei in das Querrohr 3 einströmen. Entsprechend der Größe des Wasserdurchsatzes durch das Querrohr 3 wird das Anströmglied 50 in das Querrohr 3 hinein gezogen mit der Folge, dass sich der Messstab 40 in der Spindel 20 nach unten bewegt, bis die Anströmkraft auf das Anströmglied 50 mit dem Gegendruck der entsprechend komprimierten Feder des Ventileinsatzes 1 sich etwa im Gleichgewicht befindet. An der Skala der Spindel 20 kann der Wasserdurchsatz durch das Querrohr 3 abgelesen werden.

Für eine geänderte Strömungsrichtung, beispielsweise bei Betrieb im Rücklauf, so dass die Strömung von unten nach oben, das heißt entgegen den Pfeilrichtungen 6 und 7 in Figur 1, durch das Querrohr 3 erfolgt, kann die Feder auch oberhalb des Meßstabes in der Spindel 20 angeordnet sein.

Der Ventilkörper 30 gemäß der zum Schutzgegenstand abgewandelten zweiten Ausführungsform ist einstückig aus einem deformierbaren Material gefertigt. Der Ventilkörper 30 ist axial durchbohrt, so dass er einen Innenraum 31 umfasst. Der obere Teil 32 des Ventilkörpers ist topfartig ausgebildet. An den oberen topfartigen Teil 32 schließt sich ein zylindrischer unterer Teil 34 des Ventilkörpers an. Zwischen dem oberen Teil 32 und dem unteren Teil 34 befindet sich ein Übergangsbereich 324. Der Übergangsbereich weist einen scheibenförmigen Bereich 38 auf, an den sich ein konisch nach unten zulaufender Bereich 39 anschließt. Der scheibenförmige Bereich 38 und der konisch nach unten zulaufende Bereich 39 erfüllen damit dieselbe Funktion wie eine Flachdichtung mit konisch nach unten zulaufender Verdickung (vergleiche Figur 2).

Der obere topfartige Bereich 32 des Ventilkörpers 30 weist einen Innenraum 321 auf, der einen Aufnahmebereich für zumindest einen Teil einer hohlen Spindel 20 definiert. Im Aufnahmebereich 321 ist ein Einstich 310 ausgebildet, welcher koaxial zur Längsachse 300 des Ventilkörpers 30 verläuft. Durch den Einstich wird ein Stützring 333 geformt, welcher einen Sitz 33 für eine Feder 48 (siehe Figur 5) definiert.

Im oberen Bereich des Einstichs 310 ist ein Einstich 311 angeformt, welcher senkrecht zur Längsachse 300 des Ventilkörpers 30 verläuft. Axial von diesem Einstich 311 im Bereich des koaxial zur Längsachse 300 des Ventilkörpers 30 verlaufenden Einstichs 310 befindet sich ein zweiter Einstich 312 senkrecht zur Achse 300.

Der Durchmesser D des Ventilkörpers kann variieren und auf verschiedene Anwendungen und Einbausituationen angepasst werden.

Die Tiefe des Innenraums 321, gemessen von der Oberkante des Ventilkörpers 30 kann gemäß der ersten Ausführungsform gemäß Schutzgegenstand der Erfindung beispielsweise etwa zwei Drittel der Höhe des oberen topfartigen Bereichs 32 des Ventilkörpers 30 aufweisen. Der obere topfartige Bereich 32 kann beispielsweise eine Höhe im Bereich von 50 bis 70 % der Höhe H des Ventilkörpers 30 aufweisen. Die Höhe kann jedoch auch variieren und auf verschiedene Anwendungen und Einbausituationen angepasst werden.

Entsprechend kann die Wandstärke des topfartigen Bereichs 32 zwischen dem Innenraum 321 und der äußeren Mantelfläche im Wesentlichen beliebig auf verschiedene Anwendungen und Einbausituationen angepasst werden. Zum Beispiel kann die Wandstärke im Bereich zwischen 10 und 15 % des Durchmessers D liegen. Die Tiefe des Einstichs 310, gemessen von der Oberkante des Sitzes 33, kann im Bereich von 20 bis 40 % der Höhe des oberen topfartigen Teils 32 des Ventilkörpers 30 liegen. Die Breite des Einstichs 310 in radialer Richtung in Bezug auf die Längsachse 300 des Ventilkörpers 30 kann im Bereich von 5 bis 20 % des Durchmessers D liegen.

Figur 4 zeigt den Ventilkörper 30 gemäß der zum Schutzgegenstand abgewandelten zweiten Ausführungsform mit eingesetzter Spindel 20. Die Spindel 20 weist in ihrem unteren Abschnitt 26 einen Fortsatz 290 auf, welcher im Innenraum 321 und insbesondere im Einstich 310 des Ventilkörpers 30 positioniert ist. Zumindest der untere Bereich des Fortsatzes 290 ist zwischen dem Stützring 333 und der Seitenwand des oberen topfartigen Bereichs 32 des Ventilkörpers 30 eingefasst. Der Fortsatz 290 der Spindel 20 weist zwei Vorsprünge 291 und 292 auf, welche in die senkrecht zur Längsachse 300 des Ventilkörpers 30 verlaufenden Einstiche 311 und 312 im oberen topfartigen Teil 32 des Ventilkörpers 30 eingreifen.

Beim Einsetzen der Spindel 20 in den Ventilkörper 30 wird durch die Druck- und/oder Reibungskräfte, die aus der Deformation des deformierbaren Materials des Ventilkörpers 30 beim Einsetzen der Spindel 20 entstehen, eine kraftschlüssige Verbindung erzeugt. Durch die Gestaltung der komplementären Kupplungsmittel am Fortsatz 290 und Aufnahmebereich 321 in Form von Einstichen 311, 312 und dazu korrespondierenden Vorsprüngen 291 und 292 wird des Weiteren das Ineinandergreifen der komplementären Verbindungspartner realisiert und so eine formschlüssige Verbindung aufgebaut.

Die Verbindung von Spindel 20 und Ventilkörper 30 entsteht dabei durch Einrasten, insbesondere hörbares und/oder spürbares "Einklicken" der Spindel 20 in den Aufnahmebereich 321 des Ventilkörpers 30. Aufgrund der Widerstandsüberwindung ist der Moment des Einrasten bei maschinellem Verbinden zweckmäßigerweise messbar. Die Spindel weist in ihrem mittleren Bereich eine Ringnut 250 und ein Außengewinde 23 auf.

In Figur 5 ist der Ventileinsatz 1 gemäß der zum Schutzgegenstand abgewandelten zweiten Ausführungsform in komplett montierten Zustand gezeigt. Der Innenraum 31 des Ventilkörpers 30 und der Innenraum der hohlen Spindel 20 mit dem unteren Abschnitt 26, dem mittleren Abschnitt 22 und dem oberen Abschnitt 21 definieren einen Messraum 24, in welchem ein Messstab 40 angeordnet ist. Der Messstab 40 trägt an seinem unteren Ende ein Anströmglied 50. Der Messstab 40 weist eine radial einspringende Schulter 44 auf. Zwischen der radial einspringenden Schulter 44 und dem Sitz 33 ist eine Feder 48 angeordnet. Die Spindel 20 greift mit ihrem Fortsatz 290 in den Innenraum 23 des Ventilkörpers 30 ein. Die Spindel 20 weist in ihrem mittleren Bereich 22 ein Außengewinde 23 auf. Das Gewinde 23 kämmt mit einem Innengewinde 12 des Anschlusskörpers 10. In der Ringnut 250 der Spindel 20 ist ein Dichtring 25 eingesetzt.

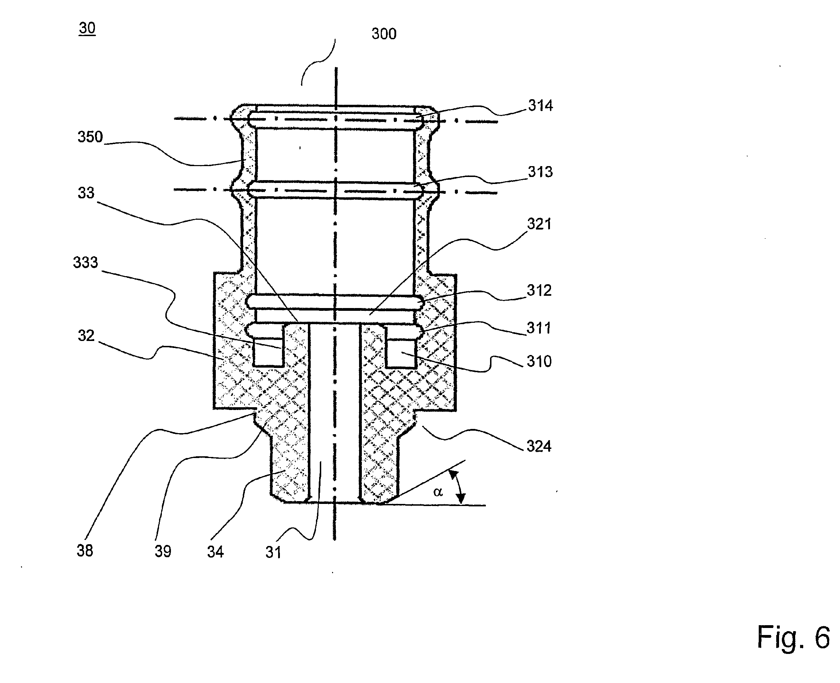

In einer zum Schutzgegenstand abgewandelten dritten Ausführungsform ist der in den Figur 3 bis 5 dargestellte Ventilkörper 30 derart weitergebildet, dass er eine Dichtschürze 350 aufweist. Figur 6 zeigt den Ventilkörper 30 gemäß der zum Schutzgegenstand abgewandelten zweiten Ausführungsform. An die obere Begrenzungsfläche des oberen topfartigen Teils 32 des Ventilkörpers 30 ist die Ventilschürze 350 angeformt. Die Höhe der Ventilschürze 350, gemessen vom oberen Ende des oberen topfartigen Teils 32 bis zur oberen Begrenzung der Dichtschürze 350, kann im Bereich von 20 bis 60 % der Gesamthöhe des Ventilkörpers 30 mit Dichtschürze 350 liegen. Die Gesamthöhe des Ventilkörpers mit Dichtschürze gemäß der zum Schutzgegenstand abgewandelten zweiten Ausführungsform kann im Bereich von 15 mm bis 30 mm liegen. Die Gesamthöhe ist jedoch auf die jeweilige Einbausituation anpassbar.

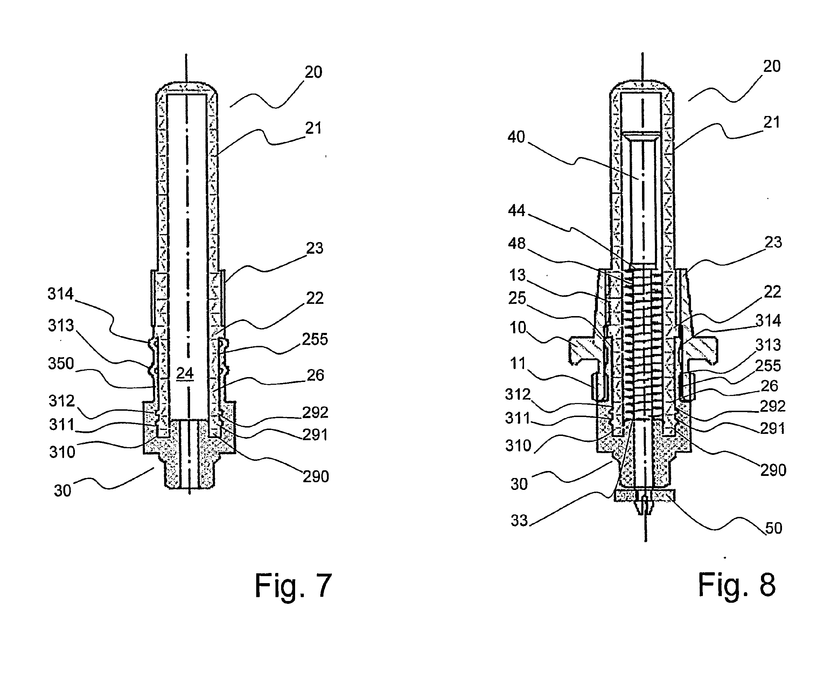

Die Dichtschürze 350 weist zwei Ausformungen 313 und 314 auf. Die Ausformung 314 bildet im wesentlichen den oberen Abschluss der Dichtschürze 350. In Figur 7 ist die Verbindung gemäß der zum Schutzgegenstand abgewandelten dritten Ausführungsform zwischen der Spindel 20 und dem Ventilkörper 30 gezeigt. Der Fortsatz 290 mit den Vorsprüngen 291 und 292 ist im Aufnahmebereich 321 des Innenraums des oberen topfartigen Teils 32 des Ventilkörpers 30 positioniert. Die Vorsprünge 291 und 292 greifen in die Einstiche 311 und 312 im Teil 32. Die Spindel 20 weist ein Außengewinde 23 auf. Unterhalb des Außengewindes 23 verjüngt sich der Außenmantel der Spindel 20 unter Ausbildung einer Dichtfläche 255. Die Dichtschürze 350 liegt an der Dichtfläche 255 der Spindel 20 an.

In Figur 8 ist ein Ventileinsatz gemäß der zum Schutzgegenstand abgewandelten dritten Ausführungsform gezeigt. Man erkennt, wie die Ausformungen 313 und 314 der Dichtschürze 350 an der Innenwand des Anschlusskörpers 10 im Bereich unter seinem Innengewinde 13 anliegen. Durch die Dichtwirkung der Dichtschürze mit den Ausformungen 313 und 314 wird das Eindringen von Wasser zwischen dem Ventilkörper 30 und dem Anschlusskörper 10 verhindert.

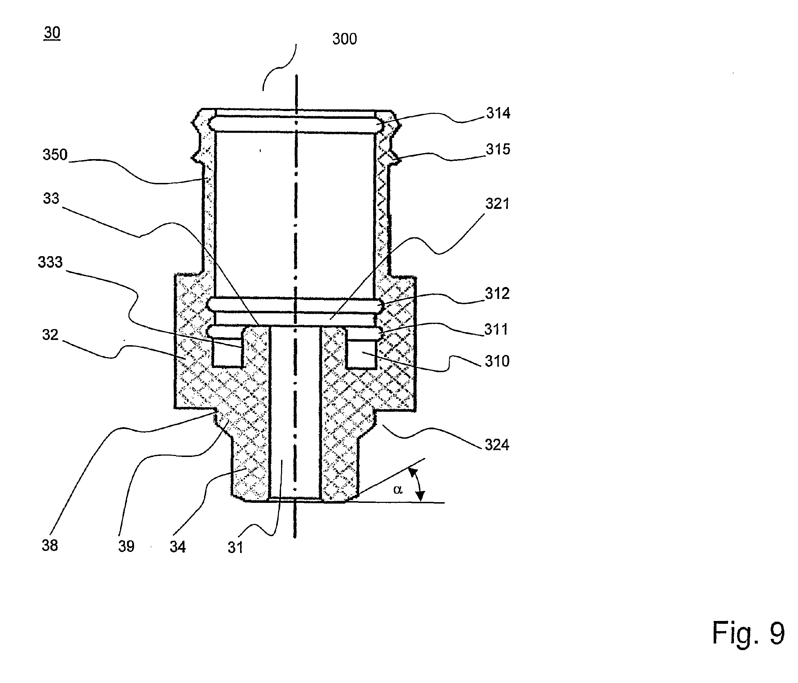

In Figur 9 ist eine Gestaltung des Ventilkörpers gemäß einer zum Schutzgegenstand abgewandelten vierten Ausführungsform gezeigt. Der Ventilkörper 30 weist eine Dichtschürze 350 auf, in deren oberen Bereich eine Ausformung 314 angebracht ist. Des Weiteren hat die Dichtschürze 350 eine umlaufende Dichtlippe 315. Auch die äußere Gestaltung der Ausformung 314 kann je nach Anwendung eine oder mehrere dichtlippenartige Form(en) aufweisen.

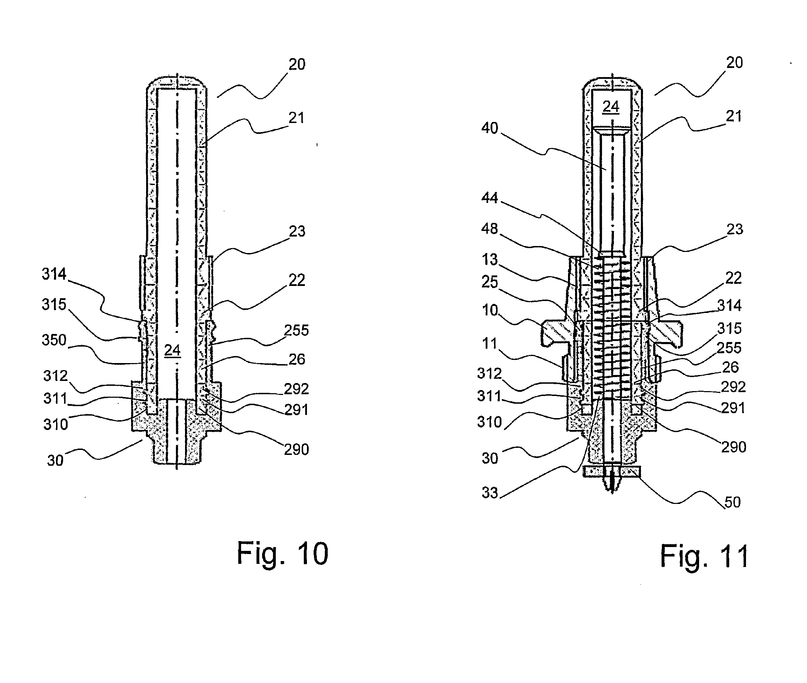

In Figur 10 ist eine Verbindung zwischen der Spindel 20 und dem Ventilkörper 30 gemäß der zum Schutzgegenstand abgewandelten vierten Ausführungsform gezeigt. An die Dichtfläche 255 der Spindel 20 liegt die Dichtschürze 350 an. Wird die Verbindung aus Spindel und Ventilkörper 30 gemäß der zum Schutzgegenstand abgewandelten vierten Ausführungsform in den Anschlusskörper 10 eingebracht (siehe Figur 11), erfolgt eine Abdichtung zwischen der Außenmantelfläche der Spindel und der Innenfläche des Anschlusskörpers 10 über die Dichtschürze 350 mit den daran angeformten Dichtlippen.

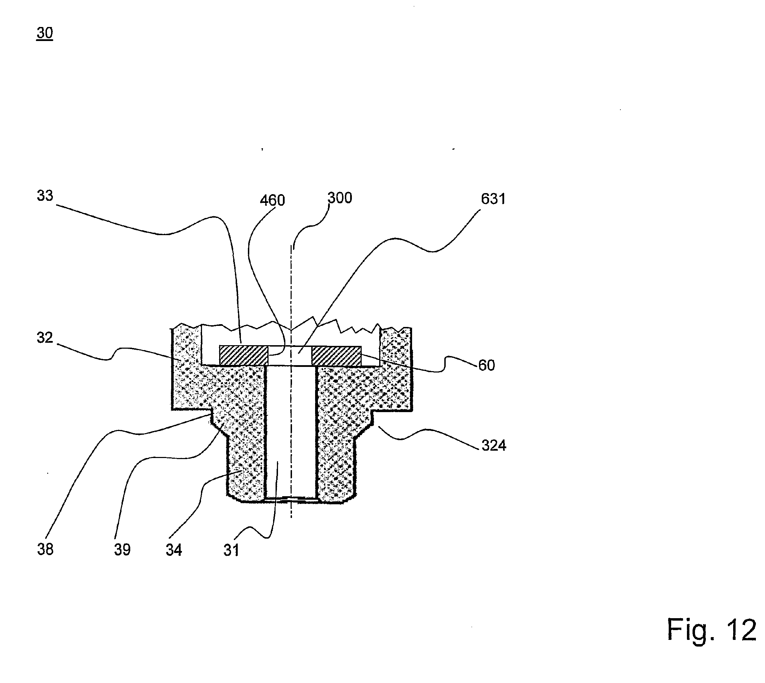

In Figur 12 ist ein Ausbruch aus einem zum Schutzgegenstand abgewandelten Ventilkörper 30 für einen Ventileinsatz mit Führungsscheibe 60 gezeigt. Die Führungsscheibe 60 ist in eine entsprechende Aussparung im oberen topfartigen Teil 32 des Ventilkörpers 30 eingelegt. Die Führungsscheibe 60 weist einen Innenraum 631 auf, an dessen Oberfläche 460 im Betrieb des Ventileinsatzes der Meßstab 40 geführt wird. Die Oberseite der Führungsscheibe 60 dient als Sitz 33 für die Feder 48, welche im Betrieb des Ventileinsatzes den Meßstab 40 beaufschlagt.

Es ist dem Fachmann ersichtlich, dass die Erfindung nicht auf das vorstehend gemäß Schutzgegenstand beschriebene Ausführungsbeispiel beschränkt ist, sondern vielmehr in vielfältiger Weise variiert werden kann.

### Bezugszeichenliste

- 1: Ventileinsatz
- 2: Hauptleitungsabschnitt,Wasserhauptleitung
- 3: Querrohr
- 35: ein Ende des Querrohrs
- 36: anderes Ende des Querrohrs
- 4: Anschlußstutzen
- 5: Ventilsitz am Querrohr
- 6: Pfeil in Strömungsrichtung des Fluids
- 7: Pfeil in Strömungsrichtung des Fluids
- 10: Anschlußkörper, Einschraubkörper
- 11: Außengewinde
- 12: Außensechskant
- 13: Innengewinde
- 14: Dom
- 20: hohle Spindel
- 21: erster Abschnitt der hohlen Spindel
- 22: zweiter Abschnitt der hohlen Spindel
- 23: Außengewinde, greift an 13
- 24: Meßraum
- 25: Dichtung
- 250: Ringnut
- 255: Dichtfläche
- 26: unterer Abschnitt der hohlen Spindel
- 27: radial einspringende Schulter
- 28: radial vorstehende Schulter
- 29: Außengewinde, greift an 30
- 290: Fortsatz
- 291: Vorsprung, greift in 311
- 292: Vorsprung, greift in 312
- 30: Ventilkörper
- 31: Innenraum des Ventilkörpers
- 431: Oberfläche des Innenraums des Ventilkörpers
- 32: oberer topfartiger Teil des Ventilkörpers
- 33: Sitz für die Spiralfeder am Boden des Teils 32
- 34: zylindrischer unterer Teil des Ventilkörpers
- 38: scheibenförmiger Bereich, Flachdichtung
- 39: konisch nach unten zulaufender Bereich, Verdickung
- 300: Längsachse von 30
- 310: Einstich im Teil 32 parallel zur Achse 300
- 311: Einstich im Teil 32 senkrecht zur Achse 300
- 312: Einstich im Teil 32 senkrecht zur Achse 300
- 313: Ausformung in der Dichtschürze 350
- 314: Ausformung in der Dichtschürze 350
- 315: Dichtlippe
- 321: Innenraum des Teils 32, Aufnahmebereich für zumindest einen Teil von 26
- 324: Übergangsbereich zwischen 32 und 34
- 333: Stützring
- 350: Dichtschürze
- 60: Führungsscheibe
- 631: Bohrung, Innenraum der Führungsscheibe
- 460: Oberfläche des Innenraums der Führungsscheibe
- 40: Meßstab
- 41: tellerartige Verbreiterung am Meßstab
- 42: Schaft des Meßstabes
- 44: radial einspringende Schulter am Meßstab
- 45: Mittellinie des Meßstabes
- 46: unterer Abschnitt des Meßstabes
- 48: Feder, Spiralfeder, Druckfeder
- 50: Anströmglied

## Patentansprüche

1. Ventileinsatz mit einem Einschraubkörper (10) in Form eines Rohrstücks, der mit einem Außengewinde (11) versehen ist und ein Innengewinde (13) aufweist, mit einer hohlen, in den Einschraubkörper eingesetzten und am oberen Ende verschlossenen Spindel (20), die mit einem oberen, durchsichtigen Abschnitt über den Einschraubkörper emporragt, an einem mittleren Abschnitt (22) ein mit dem Innengewinde kämmendes Gewinde (23) aufweist, unterhalb des Gewindes eine innen an den Einschraubkörper anliegende Dichtung (25) trägt und am unteren Ende mit einem unterhalb des Einschraubkörpers befindlichen und axial durchbohrten Ventilkörper (30) verbunden ist, wobei sich ein Meßstab (40) durch die Axialbohrung des Ventilkörpers und in die Spindel erstreckt und an seinem aus dem Ventilkörper nach unten vorstehenden Ende ein Anströmglied (50) trägt und wobei in der Spindel eine den Meßstab beaufschlagende Feder (48) beherbergt ist,
**dadurch gekennzeichnet, dass**
ein unterer Teil (34) des Ventilkörpers (30) zylindrisch und mit einem etwas kleineren Außendurchmesser als das Anströmglied (50) ausgebildet ist und am Übergang zu einer radialen Erweiterung (32) eine Flachdichtung (38) trägt, wobei die Feder den Meßstab innerhalb des von dem Einschraubkörper abgedeckten Abschnittes (22) der Spindel umgibt.

2. Einsatz nach Anspruch 1,
**dadurch gekennzeichnet, dass**
die Flachdichtung als Dichtungsscheibe ausgebildet ist.

3. Einsatz nach Anspruch 1 oder 2,
**dadurch gekennzeichnet, dass**
die Flachdichtung zur besseren Regulierung an ihrem inneren Rand mit einer konischen Verdickung (39) versehen ist.

4. Einsatz nach einem der vorstehenden Ansprüche,
**dadurch gekennzeichnet, dass**
der Ventilkörper einen Sitz (33) für die Feder aufweist, welche sich an ihrem dem Sitz gegenüberliegenden Ende an einer radialen sichtgeschützten Schulter (44) des Meßstabes (40) abstützt.

5. Einsatz nach einem der vorstehenden Ansprüche,
**dadurch gekennzeichnet, dass**
die Feder eine Druckfeder ist.

6. Einsatz nach einem der vorstehenden Ansprüche,
**dadurch gekennzeichnet, dass**
die Feder in zwei hintereinandergeschaltete Teilfedern mit unterschiedlichen Federeigenschaften unterteilt ist.

7. Einsatz nach einem der Ansprüche 1 bis 5,
**dadurch gekennzeichnet, dass**
die Feder in zwei parallelgeschaltete Teilfedern mit unterschiedlichen Federeigenschaften unterteilt ist.

8. Einsatz nach einem der vorstehenden Ansprüche,
**dadurch gekennzeichnet, dass**
der Ventilkörper aus Metall, zweckmäßig Messing besteht.

9. Einsatz nach einem der vorstehenden Ansprüche,
**dadurch gekennzeichnet, dass**
der Ventilkörper bei offenem Ventil an der Unterkante einer metallischen Mutter anliegt.

10. Einsatz nach einem der vorstehenden Ansprüche,
**dadurch gekennzeichnet, dass**
der Ventilkörper oberhalb seines unteren Teiles (34) ein radial erweitertes, eine topfartige Einsenkung umgebendes oberes Teil (32) aufweist.

11. Einsatz nach Anspruch 10,
**dadurch gekennzeichnet, dass**
das untere Ende der Spindel in das obere Teil (32) eingeschraubt ist.

12. Einsatz nach Anspruch 10 oder 11,
**dadurch gekennzeichnet, dass**
der Boden des oberen Teils Sitz der Feder ist.

13. Einsatz nach einem der Ansprüche 5 bis 12,
**dadurch gekennzeichnet, dass**
der Meßstab (40) eine von dessen oberem Ende (41) axial beabstandete Schulter (44) besitzt.

## Claims

1. Valve insert having a screw-in body (10) in the form of a pipe section, which is provided with an external thread (11) and comprises an internal thread (13), having a hollow spindle (20) which is inserted into the screw-in body, is closed at the upper end and protrudes with an upper, transparent portion over the screw-in body, comprises on a central portion (22) a thread (23) meshing with the internal thread, has below the thread a seal (25) lying on the inside against the screw-in body and is connected at the lower end to a valve body (30) which is located below the screw-in body and is axially bored through, wherein a level gauge (40) extends through the axial bore of the valve body and into the spindle and has a flow member (50) at its end protruding downwards from the valve body, and wherein a spring (48) which influences the level gauge is accommodated in the spindle,
**characterised in that** a lower part (34) of the valve body (30) is formed in a cylindrical manner and with a slightly smaller external diameter than the flow member (50) and has a flat seal (38) at the transition to a radial extension (32), wherein the spring surrounds the level gauge inside the portion (22) of the spindle which is covered by the screw-in body.

2. Insert as claimed in claim 1, **characterised in that** the flat seal is formed as a sealing washer.

3. Insert as claimed in claim 1 or 2, **characterised in that** for improved regulation the flat seal is provided on its internal edge with a conical thickened portion (39).

4. Insert as claimed in any one of the preceding claims, **characterised in that** the valve body comprises a seat (33) for the spring which is supported at its end opposite the seat on a radial shoulder (44), concealed from view, of the level gauge (40).

5. Insert as claimed in any one of the preceding claims, **characterised in that** the spring is a compression spring.

6. Insert as claimed in any one of the preceding claims, **characterised in that** the spring is divided into two partial springs which are connected in series and have different spring characteristics.

7. Insert as claimed in any one of claims 1 to 5, **characterised in that** the spring is divided into two parallel-connected partial springs having different spring characteristics.

8. Insert as claimed in any one of the preceding claims, **characterised in that** the valve body consists of metal, advantageously brass.

9. Insert as claimed in any one of the preceding claims, **characterised in that** when the valve is open the valve body lies against the lower edge of a metallic nut.

10. Insert as claimed in any one of the preceding claims, **characterised in that** the valve body comprises above its lower part (34) a radially extended upper part (32) which surrounds a pot-like depression.

11. Insert as claimed in claim 10, **characterised in that** the lower end of the spindle is screwed into the upper part (32).

12. Insert as claimed in claim 10 or 11, **characterised in that** the base of the upper part is the seat of the spring.

13. Insert as claimed in any one of claims 5 to 12, **characterised in that** the level gauge (40) comprises a shoulder (44) which is axially spaced apart from the upper end (41) thereof.

## Revendications

1. Garniture de soupape dotée d'un corps à visser (10) sous la forme d'un bout de tube, qui est muni d'un filetage extérieur (11) et présente un filetage intérieur (13), avec une broche (20) creuse, insérée dans le corps à visser et fermée sur l'extrémité supérieure, laquelle s'élève avec une partie supérieure et transparente au-dessus du corps à visser, présente sur une partie (22) centrale un filetage (23) s'engrenant avec le filetage intérieur, porte au-dessous du filetage un joint (25) s'appliquant à l'intérieur sur le corps à visser et est relié sur l'extrémité inférieure à un corps de soupape (30) se trouvant au-dessous du corps à visser et traversé axialement, une jauge (40) s'étendant à travers l'alésage axial du corps de soupape et dans la broche et portant un élément d'arrivée de courant (50) sur son extrémité dépassant vers le bas du corps de soupape et un ressort (48) sollicitant la jauge étant logé dans la broche,
**caractérisé en ce que**
une partie (34) inférieures du corps de soupape (30) est conçue de façon cylindrique et avec un diamètre extérieur légèrement plus petit que l'élément d'arrivée de courant (50) et porte un joint plat (38) sur la transition avec une extension (32) radiale, le ressort entourant la jauge à l'intérieur de la partie (22), masquée par le corps à visser, de la broche.

2. Garniture selon la revendication 1,
**caractérisée en ce que**
le joint plat est conçu comme une rondelle d'étanchéité.

3. Garniture selon la revendication 1 ou 2,
**caractérisée en ce que**
le joint plat est doté d'un épaississement (39) conique sur son bord intérieur pour une meilleure régulation.

4. Garniture selon l'une quelconque des revendications précédentes,
**caractérisée en ce que**
le corps de soupape présente un siège (33) pour le ressort qui s'appuie par son extrémité faisant face au siège sur un épaulement (44) radial, protégé de la vue, de la jauge (40).

5. Garniture selon l'une quelconque des revendications précédentes,
**caractérisée en ce que**
le ressort est un ressort de pression.

6. Garniture selon l'une quelconque des revendications précédentes,
**caractérisée en ce que**
le ressort est subdivisé en deux ressorts partiels, montés l'un derrière l'autre et présentant des propriétés de ressort différentes.

7. Garniture selon l'une quelconque des revendications 1 à 5,
**caractérisée en ce que**
le ressort est subdivisé en deux ressorts partiels montés en parallèle et présentant des propriétés de ressort différentes.

8. Garniture selon l'une quelconque des revendications précédentes,
**caractérisée en ce que**
le corps de soupape est en métal, de façon appropriée en laiton.

9. Garniture selon l'une quelconque des revendications précédentes,
**caractérisée en ce que**
le corps de soupape s'applique, lorsque la soupape est ouverte, sur le bord inférieur d'un écrou métallique.

10. Garniture selon l'une quelconque des revendications précédentes,
**caractérisée en ce que**
le corps de soupape présente, au-dessous de sa partie inférieure (34), une partie (32) supérieure élargie radialement et entourant un affaissement en forme de pot.

11. Garniture selon la revendication 10,
**caractérisée en ce que**
l'extrémité inférieure de la broche est vissée dans la partie (32) supérieure.

12. Garniture selon la revendication 10 ou 11,
**caractérisée en ce que**
le fond de la partie supérieure est le siège du ressort.

13. Garniture selon l'une quelconque des revendications 5 à 12,
**caractérisée en ce que**
la jauge (40) présente un épaulement (44) espacé axialement de son extrémité (41) supérieure.
